(19) Europäisches Patentamt
European Patent Office
Office européen des brevets

(11) EP 2 149 841 A2

(12) EUROPÄISCHE PATENTANMELDUNG

(43) Veröffentlichungstag:
03.02.2010 Patentblatt 2010/05

(51) Int Cl.:
*G06F 11/10* *(2006.01)*

(21) Anmeldenummer: 09008524.2

(22) Anmeldetag: 30.06.2009

(84) Benannte Vertragsstaaten:
AT BE BG CH CY CZ DE DK EE ES FI FR GB GR
HR HU IE IS IT LI LT LU LV MC MK MT NL NO PL
PT RO SE SI SK TR
Benannte Erstreckungsstaaten:
AL BA RS

(30) Priorität: 24.07.2008 DE 102008034837

(71) Anmelder: Atmel Automotive GmbH
74072 Heilbronn (DE)

(72) Erfinder:
• Scharfe, Andre, Dipl.-Ing.
  01728 Bannewitz (DE)
• Ruhm, Ingo, Dipl.-Ing.
  02894 Vierkirchen (DE)
• Ansel, Dieter, Dipl.-Ing. (FH)
  74081 Heilbronn (DE)

(74) Vertreter: Müller, Wolf-Christian
Koch Müller
Patentanwaltsgesellschaft mbH
Maaßstrasse 32/1
69123 Heidelberg (DE)

(54) **Speichersystem, Leseverstärker, Verwendung und Verfahren zur Fehlerdetektion mittels Parity-Bits eines Blockcodes**

(57) Speichervorrichtung für einen fehlerkorrigierenden Blockcode, wobei jedes Codewort (N) des Blockcodes Daten-Bits (d11 bis d26) und Parity-Bits (p1, p2, p3, p4, p5) aufweist,
- mit einem Speicher (300) zur Speicherung der Daten-Bits (d11 bis d26) und der Parity-Bits (p1, p2, p3, p4, p5) jedes Codeworts (N) ,

- mit einer Fehlerdetektionsschaltung (400), die ausgebildet ist in einem Codewort (N) einen Fehler der Daten-Bits (d11 bis d26) durch Auswertung genau einer Teilmenge (p4, p5) der gespeicherten Parity-Bits (p1, p2, p3, p4, p5) des Codeworts (N) zu detektieren, wobei die Teilmenge (p4, p5) kleiner als die Gesamtzahl der Parity-Bits (p1, p2, p3, p4, p5) des Codeworts (N) ist.

FIG. 1

**Beschreibung**

Die vorliegende Erfindung betrifft ein Speichersystem einen Leseverstärker, eine Verwendung und ein Verfahren zur Fehlerdetektion mittels Parity-Bits eines Blockcodes.

Aus der US 4,453,251 ist ein Speicher mit einer Fehlerkorrektur bekannt. Eine Möglichkeit der Fehlerkorrektur ist die Verwendung eines Blockcodes. Ein bekannter und für Speicher verwendeter Blockcode ist der Hamming-Code. Der Hamming-Code codiert Daten und speichert diese als Codewörter in einem Speicher. Jedes einzelne Codewort weist Datenbits und mehrere Parity-Bits (Prüf-Bits) auf. Mit Lesen der Codewörter wird der Hamming-Code überprüft, um festzustellen, ob ein gültiger Code vorliegt. Im Fehlerfall wird das fehlerhafte Bit im Codewort mittels der Hamming Fehlerkorrekturprozedur korrigiert. Laut der US 4,453,251 ist der Hamming Ansatz unattraktiv, da die Speicherkapazität wesentlich vergrößert werden muss um die Datenbits und auch die Parity-Bits jedes Codeworts unterzubringen. Alternativ wird in der US 4,453,251 für eine Speichermatrix mit Zeilen und Spalten mit jeweils einem Paritätsbit für jede Spalte und einem Paritätsbit für jede Zeile vorgeschlagen.

Aus der EP 0 926 687 A1 ist ein Verfahren zum Selbsttest und Korrektor von Fehlern vorgesehen. Im Verfahren zur Fehlerkorrektur müssen die Zeilen (Reihen) für sämtliche Spalten ausgelesen werden. Die Reihen werden in ihrer Sequenz, startend mit der Reihe 0 ausgelesen und das einfache Paritätsbit der Reihe verifiziert. Im Fehlerfall wird die entsprechende Reihe durch ein Flag gekennzeichnet und eine Prozedur zur Prüfung der Spaltenparität gestartet.

Der Erfindung liegt die Aufgabe zu Grunde ein Speichervorrichtung möglichst zu verbessern.

Diese Aufgabe wird durch eine Speichervorrichtung mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist ein Speichervorrichtung mit einem Speicher und einer Fehlerdetektionsschaltung vorgesehen. Die Speichervorrichtung kann auch als Speichersystem bezeichnet werden. Vorzugsweise ist der Speicher ein nichtflüchtiger Speicher, wie beispielsweise ein Flash-Speicher, ein FRAM-Speicher oder EEPROM-Speicher.

Die Speichervorrichtung ist für einen fehlerkorrigierenden Blockcode ausgebildet. Jedes Codewort des Blockcodes weist Daten-Bits und Parity-Bits auf. Die Speichervorrichtung ist ausgebildet in dem Speicher die Daten-Bits und die Parity-Bits des Codesworts des Blockcodes zu speichern. Die Daten-Bits können dabei Programmcode für einen Programmablauf oder Werte, wie beispielsweise Messwerte oder Steuerwerte enthalten. Die Parity-Bits können auch als Paritäts-Bits oder Prüfbits bezeichnet werden. Die Parity-Bits des Codeworts dienen dazu Fehler der Daten-Bits im selben Codewort zu detektieren. Detektierte Fehler können nachfolgend mittels des Blockcodes korrigiert werden. Bevorzugt wird ein fehlerkorrigierender Blockcode, wie beispielsweise ein Hamming-Code verwendet.

Die Speichervorrichtung weist eine Fehlerdetektionsschaltung auf, die ausgebildet ist in einem Codewort einen Fehler der Daten-Bits des Codeworts durch Auswertung genau einer Teilmenge der im Speicher gespeicherten Parity-Bits des Codeworts zu detektieren. Zur Detektion werden Prüfgleichungen verwendet, die im Codewort den Parity-Bits der Teilmenge zugeordnet sind. Die Teilmenge der Parity-Bits des Codeworts ist kleiner als die Gesamtzahl der Parity-Bits des Codeworts des Blockcodes. Beispielsweise weist das Codewort eine Gesamtzahl von fünf Parity-Bits auf. Die Teilmenge weist in diesem Beispiel maximal vier bevorzugt jedoch nur zwei Parity-Bits auf.

Ein weiterer eigenständiger Aspekt der Erfindung ist ein Lese-Verstärker einer Speichervorrichtung.Der Lese-Verstärker ist mit einer Speichermatrix der Speichervorrichtung verbunden. Der Lese-Verstärker weist einen Transistor auf, der zum Laden einer Kapazität einer Bit-Leitung an die Bit-Leitung angeschlossen ist. Die Kapazität der Bit-Leitung wird meist durch parasitäre Kapazitäten, beispielsweise einer Vielzahl angeschlossener Transistoren bewirkt. Der Transistor ist vorzugsweise ein Feldeffekttransistor, beispielsweise ein P-MOSFET.

Weiterhin weist der Lese-Verstärker eine Ausgangseinheit auf, die an die Bit-Leitung angeschlossen ist. Die Ausgangseinheit gibt den in einer Speicherzelle der Bit-Leitung gespeicherten Bitwert an einem Ausgang aus. Die Ausgangseinheit weist vorzugsweise ein flüchtiges Speicherelement, wie ein Latch oder ein Flip-Flop zur Zwischenspeicherung auf, das mit dem Ausgang des Leseverstärkers verbunden ist.

Der Lese-Verstärker weist eine schaltbare Stromquelle auf, die dem Transistor parallel geschaltet ist. Die schaltbare Stromquelle weist einen Steueranschluss zum Ein-Schalten und Aus-Schalten eines Stroms der Stromquelle auf. Die schaltbare Stromquelle ist dabei ebenfalls an die Bit-Leitung angeschlossen.

Der Erfindung liegt weiterhin die Aufgabe zu Grunde ein möglichst verbessertes Verfahren zur Fehlerdetektion anzugeben.

Diese Aufgabe wird durch das Verfahren mit den Merkmalen des unabhängigen Anspruchs 12 gelöst. Vorteilhafte Weiterbildungen sind Gegenstand von abhängigen Ansprüchen und in der Beschreibung enthalten.

Demzufolge ist ein Verfahren zur Fehlerdetektion mittels eines Blockcodes vorgesehen. Jedes Codewort des Blockcodes weist mehrere Daten-Bits und mehrere Parity-Bits auf.

In dem Verfahren wird genau eine Teilmenge der Parity-Bits ein und desselben Codeworts aus einem Speicher ausgelesen. Die übrigen Parity-Bits des Codeworts, die nicht in der Teilmenge enthalten sind, werden hingegen zunächst nicht ausgelesen.

Prüfgleichungen der ausgelesenen Parity-Bits der Teilmenge werden zur Fehlerdetektion berechnet. Beispielsweise werden in einer Prüfgleichung das jeweilige Parity-Bit des Codeworts und die zugehörigen Daten-Bits des Codeworts miteinander XOR verknüpft.

Nach der Detektion eines Fehlers eines Daten-Bits durch die Berechnung mittels der Prüfgleichungen werden nachfolgend die übrigen Parity-Bits der Gesamtzahl der Parity-Bits des Codeworts aus dem Speicher ausgelesen. Wird hingegen kein Fehler detektiert werden die übrigen, in der Teilmenge nicht enthaltenen Parity-Bits des Codeworts nicht ausgelesen und der Verfahrensablauf weiter fortgesetzt bis beispielsweise später ein Fehler detektiert wird.

Nach der Detektion eines Fehlers und dem Auslesen der übrigen, in der Teilmenge nicht enthaltenen Parity-Bits des Codeworts werden die Prüfgleichungen der übrigen ausgelesenen Parity-Bits des Codeworts berechnet. Im Rahmen der Dekodierung wird zudem der Fehler des Daten-Bits korrigiert.

Der Erfindung liegt weiterhin die Aufgabe zu Grunde, eine Verwendung von Parity-Bits eines Codeworts eines Blockcodes anzugeben.

Diese Aufgabe wird durch eine Verwendung mit den Merkmalen des unabhängigen Anspruchs 13 gelöst. Vorteilhafte Weiterbildungen sind Gegenstand von abhängigen Ansprüchen und in der Beschreibung angegeben.

Demzufolge ist eine Verwendung genau einer Teilmenge aus einer größeren Gesamtzahl von Parity-Bits desselben Codeworts eines Blockcodes zur Detektion eines fehlerhaften Daten-Bits im Codeswort vorgesehen. Die Detektion erfolgt vorzugsweise in einem Ruhemodus. Der Blockcode ist vorzugsweise ein fehlerkorrigierender Blockcode.

Der Ruhemodus weist gegenüber einem Betriebsmodus eine reduzierte Taktfrequenz insbesondere zum Auslesen der Daten-Bits beziehungsweise der Parity-Bits des Codeworts auf.

Die Gesamtzahl der Parity-Bits des Codeworts wird genau dann ausgewertet, wenn ein fehlerhaftes Daten-Bit zuvor detektiert ist.

Die im Folgenden beschriebenen Weiterbildungen beziehen sich sowohl auf die Speichervorrichtung als auch auf den Lese-Verstärker als auch auf die Verwendung als auch auf das Verfahren. Beispielsweise ergeben sich Funktionalitäten der Speichervorrichtung und des Lese-Verstärkers aus den Verfahrensmerkmalen.

In einer besonders vorteilhaften Weiterbildung sind Daten-Bits und die Parity-Bits des Codeworts in einer Zeile des Speichers gespeichert. Der Speicher ist zum parallelen Auslesen der Daten-Bits und der Parity-Bits der Zeile ausgebildet. Dabei sind die Parity-Bits der Teilmenge und die übrigen Parity-Bits desselben Codeworts in ein und derselben Zeile gespeichert. Dies ermöglicht es sämtlich Parity-Bits eines Codeworts in Echtzeit aus dem Speicher auszulesen, ohne den Programmablauf einer verbundenen Recheneinheit unterbrechen zu müssen. Weiterhin können die Zeilen und Spalten des Speichers als Speichermatrix angeordnet sein. Spalten der Speichermatrix können hingegen nicht parallel ausgelesen werden.

Gemäß einer bevorzugten Weiterbildung ist die Fehlerdetektionsschaltung ausgebildet im Falle der Detektion eines Fehlers eines Daten-Bits ein Auslesen der übrigen nicht in der Teilmenge enthaltenen Parity-Bits des Codeworts zu aktivieren. Die Aktivierung erfolgt dabei für das aktuelle Datum mit den aktuellen Daten-Bits des Codeworts. Die Aktivierung kann ebenfalls für ein nachfolgendes Datum mit neuen Daten-Bits und Parity-Bits fortgesetzt werden. Bevorzugt weist die Fehlerdetektionsschaltung für das aktuelle Datum (und ggf. auch für ein nachfolgendes Datum) getrennte Steuerausgänge zum Auslesen der übrigen, nicht in der Teilmenge enthaltenen Parity-Bits des Codeworts auf.

In einer anderen Weiterbildung ist vorgesehen, dass die Fehlerdetektionsschaltung mit einem Lese-Verstärker verbunden und ausgebildet ist den Lese-Verstärker mittels eines Steuersignals zur Aktivierung des Auslesens zu steuern. Hierzu weist der Lese-Verstärker vorzugsweise Steuereingänge auf, mittels derer ein Lesen oder Nicht-Lesen der jeweiligen Bit-Leitung steuerbar ist.

Bevorzugt weist die Fehlerdetektionsschaltung ein Speicherelement zur Speicherung der Aktivierung auf. Ein derartiges Speicherelement ist beispielsweise ein Latch oder ein Flip-Flop dessen Ausgang mit einem Steuerausgang der Fehlerdetektionsschaltung verbunden ist.

Gemäß einer bevorzugten Weiterbildung ist die Fehlerdetektionsschaltung mit einer Recheneinheit verbunden. Die Recheneinheit ist beispielsweise ein Rechenkern eines Mikrocontrollers. Die Fehlerdetektionsschaltung ist vorzugsweise zur Löschung der Speicherung der Aktivierung durch ein Steuersignal - beispielsweise einem Flag - der Recheneinheit ausgebildet.

Gemäß einer vorteilhaften Weiterbildung weist der Lese-Verstärker eine Logikeinheit auf, deren Ausgang an den Steuereingang des Transistors angeschlossen ist. Vorzugsweise sind zwei Eingangswerte an zwei Eingängen der Logikeinheit durch die Logikeinheit logisch verknüpft. Beispielsweise verknüpft die Logikeinheit als logische Verknüpfung die Eingangswerte logisch UND oder logisch ODER.

Bevorzugt sind die schaltbare Stromquelle und der Transistor des Lese-Verstärkers an der Bit-Leitung, die einem Parity-Bit des Codeworts des Blockcodes zugeordnet ist, angeschlossen. Bevorzugt ist das Parity-Bit des Codeworts nicht in der Teilmenge enthalten. Bevorzugt ist jeweils eine Stromquelle an einer Bit-Leitung jedes Parity-Bits des Codeworts, das nicht in der Teilmenge enthalten ist, angeschlossen, so dass die Bit-Leitung auch nach Ansteuerung der Wort-Leitung durch einen durch die Stromquelle begrenzten Konstantstrom bestromt werden kann.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

Dabei zeigen

Fig. 1 eine schematische Darstellung eines Speichersystems,

Fig. 2 eine Schaltung eines Lese-Verstärkers,

Fig. 3 eine weitere Schaltung eines Lese-Verstärkers,

Fig. 4 eine Generatormatrix eines Blockcodes,

Fig. 5 eine Generatormatrix mit Codeverkürzung, und

Fig. 6 ein schematisches Ablaufdiagramm eines Verfahrens.

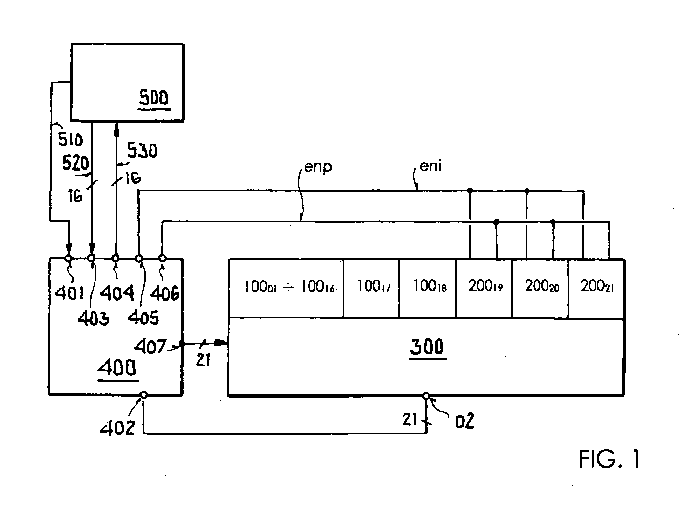

In Fig. 1 ist eine Speichervorrichtung durch ein Blockschaltbild schematisch dargestellt. Gezeigt ist eine Speichermatrix 300 mit Lese-Verstärkern $100_{10}$ bis $100_{16}$, die an Bit-Leitungen von Daten-Bits angeschlossen sind, mit Lese-Verstärkern $100_{17}$, $100_{18}$, $200_{19}$, $200_{20}$, $200_{21}$, die an Bit-Leitungen von Parity-Bits eines Blockcodes angeschlossen sind. Die gespeicherte Information in der Speichermatrix 300 wird mittels den Bit-Leitungen und Wort-Leitungen (beide nicht dargestellt) durch eine Adressierung (ebenfalls nicht dargestellt) ausgelesen. Die Ansteuerung der Matrix zum Auslesen der gespeicherten Information ist an sich bekannt und zu Gunsten einer verbesserten Übersichtlichkeit in Fig. 1 fortgelassen.

Weiterhin ist in Fig. 1 eine Fehlerdetektionsschaltung 400 und eine Recheneinheit 500, beispielsweise ein Rechenkern eines Mikrocontrollers, gezeigt. Das in Fig. 1 gezeigte Speichersystem ist ausgebildet in dem Speicher 300 jeweils zu einem Codewort zusammengefasste Daten-Bits und Parity-Bits eines fehlerkorrigierenden Blockcodes zu speichern. Ein nutzbarer Blockcode ist beispielsweise ein 31-Bit-Hamming-Code. Zur Speicherung werden Daten-Bits beispielsweise über die Verbindung 520 von der Recheneinheit 500 an einen Eingang 403 der Fehlerdetektionsschaltung 400 übertragen. Die Fehlerdetektionsschaltung 400 ist zur Kodierung mittels des Blockcodes ausgebildet. Daten-Bits und Parity-Bits jedes Codeworts des Blockcodes werden über den Ausgang 407 der Fehlerdetektionsschaltung 400 in die Speichermatrix 300 geschrieben.

Die Fehlerdetektionsschaltung 400 ist ausgebildet einen Fehler der Daten-Bits durch Auswertung genau einer Teilmenge der gespeicherten Parity-Bits eines Codeworts zu detektieren, wobei die Teilmenge kleiner als die Gesamtzahl der Parity-Bits des Codeworts ist. Zum Auslesen der Daten-Bits und Parity-Bits des Codeworts ist die Speichermatrix 300 über einen Ausgang 02 mit der Fehlerdetektionsschaltung 400 verbunden.

Um das Auslesen der Parity-Bits auf die Teilmenge des Codeworts zu reduzieren weist die Fehlerdetektionsschaltung 400 einen ersten Steuerausgang 406 zur Ausgabe eines ersten Steuersignals enp und einen zweiten Steuerausgang 405 zur Ausgabe eines zweiten Steuersignal eni auf. Der erste Steuerausgang 406 und der zweite Steuerausgang 405 sind mit Lese-Verstärker $200_{19}$, $200_{20}$, $200_{21}$ verbunden. Diese Lese-Verstärkern $200_{19}$, $200_{20}$, $200_{21}$ sind an Bit-Leitungen (nicht dargestellt) für Parity-Bits angeschlossen, die nicht in der Teilmenge enthalten sind. Die Lese-Verstärker $100_{17}$, $100_{18}$, die an Bit-Leitungen für die Parity-Bits der Teilmenge angeschlossen sind, sind hingegen nicht mit den Steuerausgängen 405, 406 der Fehlerdetektionsschaltung 400 verbunden, so dass die Parity-Bits der Teilmenge bei jeder beliebigen Adressierung über den Ausgang 02 ausgegeben werden.

Die Fehlerdetektionsschaltung 400 ist ausgebildet im Falle der Detektion eines Fehlers ein Auslesen der übrigen nicht in der Teilmenge enthaltenen Parity-Bits des Codeworts zu aktivieren. Hierzu wird am zweiten Steuerausgang 405 das Steuersignal eni verändert, so dass asynchron zu einer Taktung unmittelbar nach der Fehlerdetektion durch die Fehlerdetektionsschaltung 400 die Lese-Verstärker $200_{19}$, $200_{20}$, $200_{21}$ für die nicht in der Teilmenge enthaltenen Parity-Bits zur Ausgabe der Parity-Bits angesteuert werden. Die Daten-Bits und die Parity-Bits des Codeworts sind dabei in jeweils einer Zeile der Speichermatrix 300 des Speichers gespeichert. Eine Zeile wird durch eine Ansteuerung aktiviert, so dass alle Daten-Bits und Parity-Bits der aktivierten Zeile parallel ausgelesen werden können. Bits in Spalten (nicht dargestellt) der Speichermatrix 300 können hingegen nicht parallel ausgelesen werden. Zum Auslesen von Daten werden die Spalten nacheinander angesteuert.

Mittels des über den ersten Steuerausgang 406 ausgebbaren ersten Steuersignals enp kann die Ausgabe der nicht in der Teilmenge enthaltenen Parity-Bits dauerhaft, d.h. für nachfolgende Daten (bspw. anderer Spalten), aktiviert werden. Hierzu weist die Fehlerdetektionsschaltung 400 vorteilhafterweise ein Speicherelement in Form eines Flip-Flops zur Speicherung der Aktivierung auf. Ist beispielsweise das Flip-Flop gesetzt, verhalten sich die Lese-Verstärker $200_{19}$,

$200_{20}$, $200_{21}$ für die nicht in der Teilmenge enthaltenen Parity-Bits wie die Lese-Verstärker $100_{17}$, $100_{18}$ der in der Teilmenge enthaltenen Parity-Bits.

Der Steuereingang 401 der Fehlerdetektionsschaltung 400 ist über eine Steuerleitung 510 mit der Recheneinheit 500 verbunden. Mittels der Steuerleitung 510 und einem Programmablauf ist die Recheneinheit 500 zur Speicherung der Aktivierung und/oder Löschung der Speicherung der Aktivierung durch ein Steuersignal befähigt.

Weiterhin ist die Fehlerdetektionsschaltung 400 zur Korrektur fehlerhafter Daten-Bits in einem Codewort mittels des Blockcodes ausgebildet. Korrekte oder korrigierte Daten-Bits werden über den Ausgang 404 der Fehlerdetektionsschaltung 400 und die Verbindung 530 an die Recheinheit 500 übertragen.

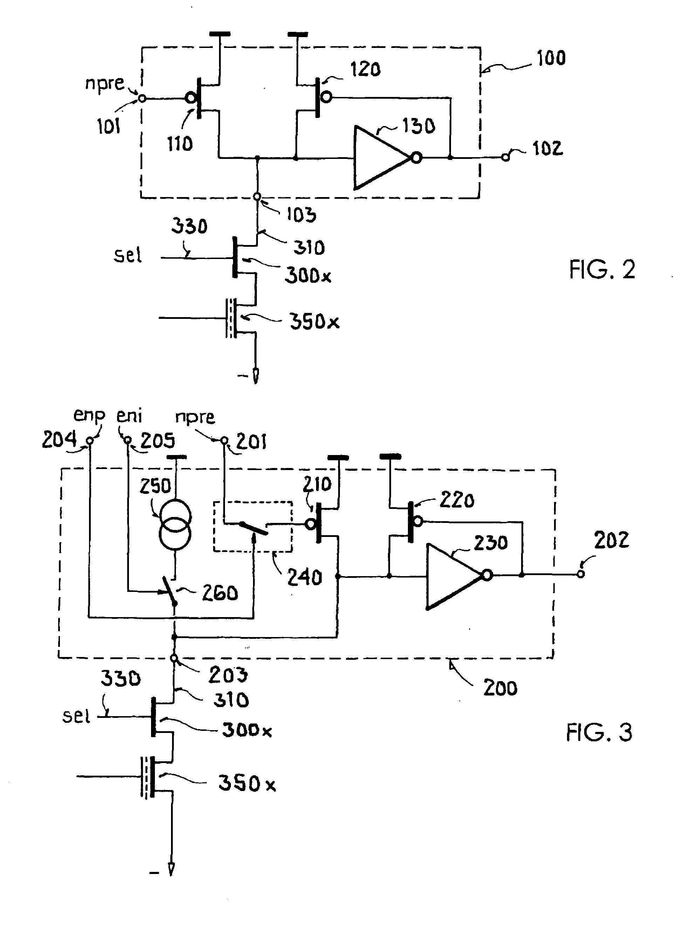

In Fig. 2 sind ein Lese-Verstärker 100, ein mit der Wort-Leitung 330 verbundener Auswahltransistor 300x und eine Speicherzelle 350x in einem Teilschaltplan schematisch dargestellt. Die Ansteuerung des mit der Wort-Leitung 330 verbundenen Auswahltransistors 300x erfolgt über das aus der Adressierung ermittelte Steuersignal sel. Der Lese-Verstärker 100 weist einen Transistor (PMOS) 110 zum Vorladen (engl. precharge) der am Anschluss 103 des Lese-Verstärkers 100 angeschlossenen Bit-Leitung 310 auf. Der Transistor 110 wird direkt durch ein Steuersignal npre einer Adressierung gesteuert.

Weiterhin ist ein Latch, bestehend aus einem weiteren Transistor (PMOS) 120 und einem Inverter 130, vorgesehen. Ein Ausgang des Latchs ist mit dem Ausgang 102 des Lese-Verstärkers 100 verbunden. Der Eingang des Latchs ist über den Anschluss 103 ebenfalls an der Bit-Leitung 310 angeschlossen. Der Lese-Verstärker 100 kann vorteilhafterweise für die Lese-Verstärker $100_{10}$ bis $100_{16}$, $100_{17}$, $100_{18}$, im Ausführungsbeispiel der Fig. 1 verwendet werden.

In Fig. 3 ist ein Lese-Verstärker 200 mit einem Ausgang 202 für die nicht in der Teilmenge enthaltenen Parity-Bits des Codeworts als schematische Schaltung gezeigt. Auch der Lese-Verstärker 200 des Ausführungsbeispiels der Fig. 3 weist einen Transistor (PMOS) 210 zum Vorladen (engl. precharge) der am Anschluss 203 des Lese-Verstärkers 200 angeschlossenen Bit-Leitung 310 auf. Der Transistor 210 wird über eine logische Verknüpfung 240 durch das Steuersignal npre der Adressierung gesteuert.

Ebenfalls ist ein Latch, bestehend aus einem weiteren Transistor (PMOS) 220 und einem Inverter 230, vorgesehen. Der Ausgang des Latchs ist mit dem Ausgang 202 des Lese-Verstärkers 200 verbunden. Der Eingang des Latchs ist über den Anschluss 203 ebenfalls an der Bit-Leitung 310 angeschlossen.

Zusätzlich weist der Lese-Verstärker 200 eine schaltbare Stromquelle 250, 260 auf, die im Ausführungsbeispiel der Fig. 3 durch eine Konstantstromquelle 250 und eine Schaltereinheit 260 gebildet ist. Die schaltbare Stromquelle 250, 260 ist an einen Steuereingang 205 des Lese-Verstärkers 200 angeschlossen, an den das Steuersignal eni anlegbar ist. Die schaltbare Stromquelle 250, 260 ist ebenfalls an den Ausgang 203 des Lese-Verstärkers 200 angeschlossen und somit dem Transistor 210 parallel geschaltet.

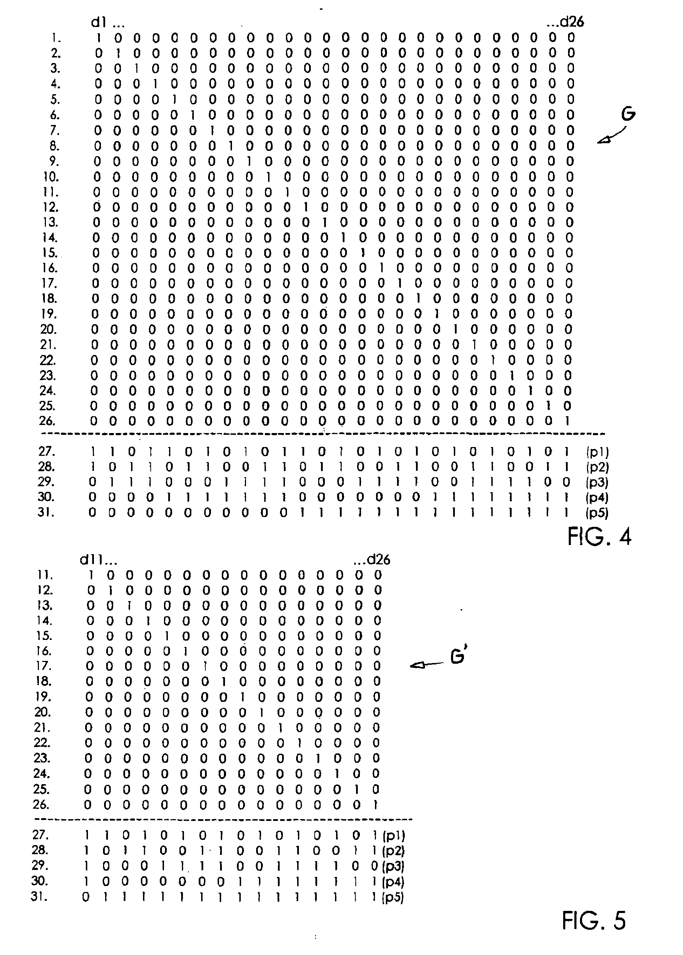

Ein Eingang der logischen Verknüpfung 240 ist mit einem Steuereingang 204 für das Steuersignal enp verbunden. Die logische Verknüpfung ist dabei derart ausgebildet, dass in Abhängigkeit vom Steuersignal enp das Steuersignal npre zum Steueranschluss des Transistors 210 gelangt. Im Ausführungsbeispiel der Fig. 4 ist die logische Verknüpfung als Schalter ausgebildet. Alternativ kann auch ein UND-Gatter, NAND-Gatter, OR-Gatter oder NOR-Gatter als logische Verknüpfung verwendet werden.

Der Lese-Verstärker 200 kann vorteilhafterweise für die Lese-Verstärker $200_{19}$, $200_{20}$ und $200_{21}$ im Ausführungsbeispiel der Fig. 1 verwendet werden.

Ein Beispiel eines Blockcodes ist ein Hamming Code. Ein Codewort N eines 31 Bit Hamming Codes lässt sich darstellen als

$$N = d1|d2|d3|d4|d5|d6|d7|d8|d9|d10|d11|d12|d13|d14|d15|d16|d17|d18|d19|$$
$$|d20|d21|d22|d23|d24|d25|d26|p1|p2|p3|p4|p5$$

Dabei sind d1 bis d26 die Daten-Bits des Codeworts N und p1 bis p5 die Parity-Bis des Codeworts N.

Fig. 4 zeigt eine Generatormatrix G eines 31 Bit Hamming Codes. Dieser fehlerkorrigierende Blockcode weist 26 Daten-Bits (n) d1 bis d26, das auch als Datenwort bezeichnet wird, und 5 Parity-Bits (k) p1 bis p5, die auch als Kontrollstellen oder Prüfbits bezeichnet werden, auf. Die Gesamtlänge des Codewortes N beträgt 31 Bits.

In Fig. 5 ist eine Generatormatrix G' dargestellt, die aus der Generatormatrix G der Fig. 4 abgeleitet ist. Im Ausführungsbeispiel der Fig. 5 wurde eine Codeverkürzung durchgeführt, so dass nur die Daten-Bits d11 bis d26 überprüft werden und die Daten-Bits d1 bis d10 auf einen festen Wert (Null oder Eins) gesetzt werden. Es verbleiben also 16 Daten-Bits d11 bis d26, wobei die Bitbreite der Daten-Bits d11 bis d26 einer Befehlsbusbreite einer Recheneinheit insbesondere eines Rechenkerns (eines Mikrocontrollers, einer CPU) entspricht, so dass die Generatormatrix G' entsprechend reduziert ist. Man erkennt, dass für die Prüfgleichung für die fünfte Parity-Bit p5 nur die Daten-Bits d12 bis d26 des Codeworts N ausgewertet werden, so dass mittels XOR-Verknüpfungen gelten muss:

$$p5 \otimes d12 \otimes d13 \otimes d14 \otimes d15 \otimes d16 \otimes d17 \otimes d18 \otimes d19 \otimes d20 \otimes d21 \otimes d22 \otimes d23 \otimes d24 \otimes d25 \otimes d26 = 0$$

Es muss jedoch zusätzlich noch ein zweites Parity-Bit des Codeworts N ausgewertet werden um für alle Bits erkennen zu können, ob ein Fehlerfall vorliegt. Wird beispielsweise die Prüfgleichung für p4 verwendet gilt:

$$p4 \otimes d11 \otimes d19 \otimes d20 \otimes d21 \otimes d22 \otimes d23 \otimes d24 \otimes d25 \otimes d26 = 0$$

Alternativ können, wie aus Fig. 5 ersichtlich, die Prüfgleichungen der Parity-Bits p1, p2 oder p3 anstelle von p4 verwendet werden. Werden abweichend vom Ausführungsbeispiel der Fig. 5 nur die Daten-Bits d12 bis d26 (15 Bits) benötigt, ist eine Auswertung der Prüfgleichung p5 zur Detektion eines Fehlers ausreichend.

Im Ausführungsbeispiel der Fig. 5 werden also nur die 16 Daten-Bits d11 bis d26 des Codeworts N und eine Teilmenge Parity-Bits p4 und p5 der Gesamtmenge der Parity-Bits (p1 bis p5) des Codeworts N also insgesamt 18 Bits der Gesamtzahl von 21 Bits des Codeworts N - das einem Datum entspricht - aus dem Speicher ausgelesen. Es werden also beim ersten Lesen eines Datums mit Paritätsinformationen aus dem Speicher nicht alle Paritäts-Bits ausgelesen um Strom zu sparen aber trotzdem Bitfehler detektieren zu können.

Sind beide Gleichungen erfüllt, so muss das Datum mit vollständiger Parität, also mit allen fünf Parity-Bits p1 bis p5 nicht bestimmt werden. Ausschließlich im Fehlerfall müssen zusätzlich zur Teilmenge die übrigen Parity-Bits des Codeworts, also im Ausführungsbeispiel der Fig. 5 die übrigen Parity-Bits p1, p2 und p3 des Codeworts aus dem Speicher ausgelesen werden um ein fehlerhaftes Daten-Bit zu korrigieren. Hierzu können die übrigen Parity-Bits p1, p2 und p3 nachträglich - beispielsweise asynchron zu einer Taktung - ausgelesen werden, oder es werden alternativ alle Parity-Bits p1 bis p5 - also die Parity-Bits p4 und p5 der Teilmenge noch einmal - gelesen.

Bei Flash-Speichern oder EEPROM-Speichern ist der Fehlerfall eines fehlerhaften Daten-Bits sehr selten. Jedoch wird mittels des Ausführungsbeispiels der Fig. 5 der überraschende Effekt erzielt, dass 3 Bits von 21 Bits (abgesehen vom sehr seltenen Fehlerfall) nicht ausgelesen werden. Wird ein gleiche Häufigkeit von Nullen und Einsen angenommen, müssen im Mittel 3 Bit-Leitungen, der drei Parity-Bits p1, p2 und p3 außerhalb der Teilmenge, weniger bestromt werden, so dass eine Stromersparnis von etwa 14,3% erzielt wird. Dennoch stehen im Fehlerfall alle Parity-Bits p1 bis p5 zur Decodierung und damit zur Korrektur des fehlerhaften Daten-Bits zur Verfügung. Weiterhin wird durch diese Lösung das Lesen der Daten nicht langsamer ausgeführt, da die Recheneinheit durch die Fehlerkorrektur nicht beeinträchtigt wird. Die Fehlerkorrektur wird autark durch die Speichervorrichtung ohne Eingriff in die Programmstruktur der Recheneinheit durchgeführt. Aufgrund der asynchronen Fehlerkorrektur kann diese asynchron zu einer Taktung der Recheneinheit noch zwischen zwei Takten der Recheneinheit erfolgen. Bei einer sehr hohen Taktung der Recheneinheit kann zu diesem Zweck die Taktung der Recheneinheit kurz angehalten werden.

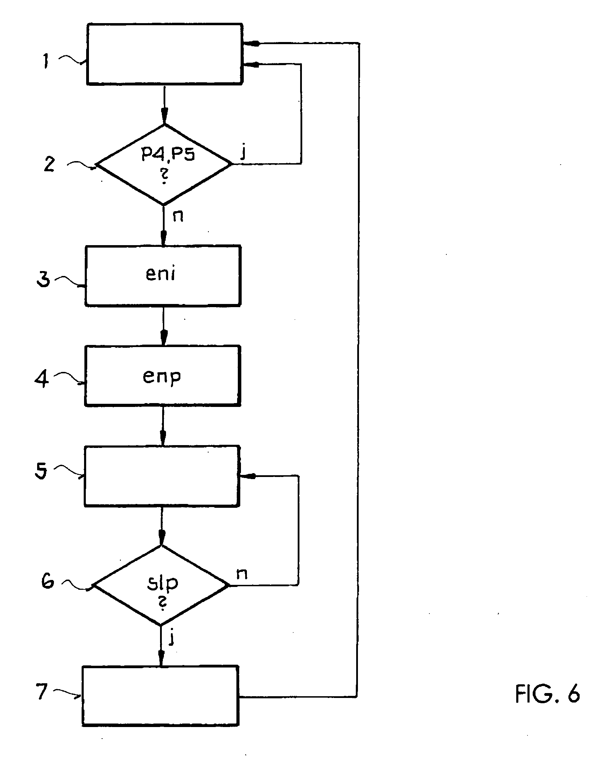

Ein schematisches Ablaufdiagramm eines Verfahrens ist in Fig. 6 dargestellt. In einem ersten Schritt 1 wird von einer Recheneinheit ein Ruhemodus mit gegenüber einem normalen Betriebsmodus reduzierter Taktfrequenz gesteuert. Weiterhin wird in Schritt 1 eine Fehlerdetektion mittels einer Teilmenge von Parity-Bits eines Codeworts eines Blockcodes, beispielsweise eines Hamming-Codes, gestartet.

Im nachfolgenden Schritt 2 werden Parity-Bits p4 und p5 der Teilmenge des Codeworts aus einem Speicher mit der reduzierten Taktfrequenz ausgelesen. Weiterhin werden im Schritt 2 Prüfgleichungen der ausgelesenen Parity-Bits p4, p5 der Teilmenge zur Fehlerdetektion berechnet. Liegt kein Fehler vor, wird das Verfahren im Schritt 1 fortgesetzt. Dabei kann der Ruhemodus fortgesetzt werden, so dass der Ablauf erneut zu Schritt 2 gelangt.

Wird in Schritt 2 ein Fehler durch Berechnung der Prüfgleichungen der ausgelesenen Parity-Bits p4, p5 des Codeworts detektiert, wird in Schritt 3 das Steuersignal eni ausgegeben. Das Steuersignal eni bewirkt, dass ein Lese-Verstärker die Bit-Leitungen für die übrigen, nicht in der Teilmenge enthaltenen Parity-Bits p1, p2, p3 des Codeworts bestromt und diese Parity-Bits p1, p2, p3 zur Dekodierung ausliest. Mit dem Auslesen der Parity-Bits p1 bis p3 aus dem Speicher werden die Prüfgleichungen der übrigen ausgelesenen Parity-Bits p1 bis p3 des Codeworts berechnet Der Fehler eines Daten-Bits wird mittels der Decodierung korrigiert. Die Korrektur ist durch den Hamming-Code als fehlerkorrigierenden Blockcode möglich.

Schritt 3 erfolgt vorzugsweise asynchron zur Taktung der Recheneinheit. Hierdurch liegt bereits vor dem nächsten Takt durch die asynchrone Decodierung ein korrigierter Speicherinhalt an der Recheneinheit für den weiteren Programmablauf an.

Mit dem nächsten Taktsignal wird in Schritt 4 das weitere binäre Steuersignal enp ausgegeben. Hierzu wird beispielsweise ein Registerwert oder Flip-Flop gesetzt. Mit der Ausgabe des weiteren Steuersignals enp wird das Auslesen der Parity-Bits p4, p5 der Teilmenge des Codeworts beendet und nachfolgend alle Parity-Bits p1 bis p5 des Codeworts ausgelesen. Dies kann vorteilhaft sein, wenn sich das fehlerhafte Daten-Bit in einer Programmschleife befindet, die fortlaufend wiederholt wird. Die Fehlerkorrektur ist somit fortlaufend aktiv.

Im folgenden Schritt 5 wechselt das Programm in den Betriebsmodus mit gegenüber dem Ruhemodus erhöhter Taktfrequenz. Beispielsweise ist es im Schritt 5 möglich Programmteile, die das fehlerhafte Daten-Bit enthalten, in einen anderen Speicherbereich zu verschieben.

Wird in Schritt 6 erneut der Ruhemodus slp gesteuert oder ermittelt, wird das Programm in Schritt 7 fortgesetzt. Andernfalls wird der Betriebsmodus in Schritt 5 fortgesetzt. In Schritt 7 werden die Steuersignale eni und enp zurückgesetzt, so dass nach Schritt 1 folgend im Schritt 2 wiederum lediglich die Parity-Bits p4 und p5 der Teilmenge des Codeworts ausgelesen werden.

Die Erfindung ist nicht auf die dargestellten Ausgestaltungsvarianten der Figuren 1 bis 6 beschränkt. Beispielsweise ist es möglich für größere Bit-Breiten einen anderen Hamming-Code zu verwenden. Auch ist es möglich einen anderen Blockcode als den Hamming-Code zu verwenden. Die Funktionalität des Speichersystems gemäß Fig. 1 kann besonders vorteilhaft für ein batteriebetriebenes System und/oder einen Transponder verwendet werden, der über ein Feld mit Energie versorgt wird.

Bezugszeichenliste

| | |
|---|---|
| 100, 200, $100_{01}$ bis $100_{16}$, $100_{17}$, $100_{18}$, $200_{19}$, $200_{20}$, $200_{21}$ | Lese-Verstärker |
| 101, 201, 204, 205 | Steuereingang |
| 102, 202 | Datenausgang |
| 103, 203 | Bit-Leitungsanschluss |
| 110, 120, 210, 220 | Transistor, PMOS |
| 130, 230 | Inverter |
| 240 | Logikelement |
| 250 | Stromquelle |
| 260 | Transistor, Schalterelement |
| 300 | Speichermatrix |
| 300x | Auswahltransistor der Wort-Leitung |
| 330 | Wort-Leitung |
| 350x | Speicherelement, Flashzelle, EEPROM-Zelle |
| 400 | Fehlerdetektionsschaltung |
| 401 | Steuereingang |
| 402, 403 | Eingang |
| 404, 407 | Ausgang |
| 405, 406 | Steuerausgang |
| 500 | Recheneinheit, Kern |
| 510 | Steuerleitung |
| 520, 530 | Verbindung |
| G | Generatormatrix |
| G' | Generatormatrix mit Codeverkürzung |
| N | Codewort |
| d1 bis d26 | Daten-Bits |
| p1 bis p5 | Parity-Bits, Paritäts-Bits, Prüfbits |
| eni | Steuersignal |
| enp | Steuersignal |
| npre | Steuersignal |
| Sel | Steuersignal |
| slp | Ruhemodus |

**Patentansprüche**

1. Speichervorrichtung für einen fehlerkorrigierenden Blockcode, wobei jedes Codewort (N) des Blockcodes Daten-Bits (d11 bis d26) und Parity-Bits (p1, p2, p3, p4, p5) aufweist,

- mit einem Speicher (300) zur Speicherung der Daten-Bits (d11 bis d26) und der Parity-Bits (p1, p2, p3, p4, p5) jedes Codeworts (N) ,
- mit einer Fehlerdetektionsschaltung (400), die ausgebildet ist in einem Codewort (N) einen Fehler der Daten-Bits (d11 bis d26) durch Auswertung genau einer Teilmenge (p4, p5) der gespeicherten Parity-Bits (p1, p2, p3, p4, p5) des Codeworts (N) zu detektieren, wobei die Teilmenge (p4, p5) kleiner als die Gesamtzahl der Parity-Bits (p1, p2, p3, p4, p5) des Codeworts (N) ist.

2. Speichervorrichtung nach Anspruch 1,

- bei die Daten-Bits (d11 bis d26) und die Parity-Bits (p1, p2, p3, p4, p5) des Codeworts (N) in einer Zeile des Speichers (300) gespeichert sind, wobei der Speicher (300) zum parallelen Auslesen der Daten-Bits (d11 bis d26) und der Parity-Bits (p1, p2, p3, p4, p5) der Zeile ausgebildet ist.

3. Speichervorrichtung nach einem der vorhergehenden Ansprüche,

- bei der die Fehlerdetektionsschaltung (400) ausgebildet ist im Falle der Detektion eines Fehlers eines Daten-Bits (d11 bis d26) ein Auslesen der übrigen nicht in der Teilmenge (p4, p5) enthaltenen Parity-Bits (p1, p2, p3) des Codeworts (N) zu aktivieren.

4. Speichervorrichtung nach einem der vorhergehenden Ansprüche,

- mit einem Lese-Verstärker (200), der mit der Fehlerdetektionsschaltung (400) verbunden ist.

5. Speichervorrichtung nach Anspruch4,

- bei der die Fehlerdetektionsschaltung (400) ausgebildet ist den Lese-Verstärker (200) mittels eines Steuersignals (eni, enp) zur Aktivierung des Auslesens der übrigen nicht in der Teilmenge enthaltenen Parity-Bits (p1, p2, p3) des Codeworts (N) zu steuern.

6. Speichervorrichtung nach einem der Ansprüche 3 bis 5,

- bei der die Fehlerdetektionsschaltung (400) ein Speicherelement zur Speicherung der Aktivierung aufweist.

7. Speichervorrichtung nach einem vorhergehenden Anspruch,

- mit einer Recheneinheit (500), die mit der Fehlerdetektionsschaltung (400) verbunden ist.

8. Speichervorrichtung nach Anspruch 7,

- bei dem die Fehlerdetektionsschaltung (400) zur Löschung der Speicherung der Aktivierung anhand eines Steuersignals der Recheneinheit (500) ausgebildet ist.

9. Speichervorrichtung nach einem der vorhergehenden Ansprüche,

- mit einem Lese-Verstärker (200),
- bei der der Lese-Verstärker (200) einen Transistor (210) aufweist, der zum Laden einer Kapazität einer Bit-Leitung (310) an die Bit-Leitung (310) angeschlossen ist,
- bei der der Lese-Verstärker (200) eine Ausgangseinheit (220, 230) aufweist, die zur Ausgabe eines gespeicherten Bitwertes an die Bit-Leitung (310) angeschlossen ist, und
- bei der der Lese-Verstärker (200) eine schaltbare Stromquelle (250, 260) aufweist, die dem Transistor (210) parallel geschaltet ist, und die einen Steueranschluss (205) zum Schalten eines Stroms der Stromquelle (250, 260) aufweist,
- bei der die schaltbare Stromquelle (250, 260) an die Bit-Leitung (310) angeschlossen ist.

10. Speichervorrichtung nach Anspruch 9,

- mit einer Logikeinheit (240), deren Ausgang an den Steuereingang des Transistors (210) angeschlossen ist, wobei insbesondere zwei Eingangswerte an zwei Eingängen der Logikeinheit (240) durch die Logikeinheit (240) logisch verknüpft sind, insbesondere logisch UND oder logisch ODER verknüpft sind.

11. Speichervorrichtung nach einem der Ansprüche 9 oder 10,

- bei der die schaltbare Stromquelle (250, 260) und der Transistor (210) an der Bit-Leitung (310), die einem Parity-Bit (p1, p2, p3) eines Blockcodes zugeordnet ist, angeschlossen sind.

12. Verfahren zur Fehlerdetektion mittels eines Blockcodes, wobei jedes Codewort (N) des Blockcodes Daten-Bits (d11 bis d26) und Parity-Bits (p1, p2, p3, p4, p5) aufweist,

- bei dem eine Teilmenge (p4, p5) der Parity-Bits eines Codeworts (N) aus einem Speicher (300) ausgelesen wird,
- bei dem Prüfgleichungen der ausgelesenen Parity-Bits der Teilmenge (p4, p5) zur Fehlerdetektion berechnet werden,
- bei dem nach der Detektion eines Fehlers eines Daten-Bits folgend die übrigen Parity-Bits (p1, p2, p3) der Gesamtzahl der Parity-Bits des Codeworts (N) aus dem Speicher (300) ausgelesen werden, die Prüfgleichungen der übrigen ausgelesenen Parity-Bits (p1, p2, p3) berechnet werden und der Fehler des Daten-Bits korrigiert wird.

13. Verwendung genau einer Teilmenge (p4, p5) aus einer größeren Gesamtzahl von Parity-Bits (p1, p2, p3, p4, p5) eines Codeworts (N) eines fehlerkorrigierenden Blockcodes zur Detektion eines fehlerhaften Daten-Bits in einem Ruhemodus mit gegenüber einem Betriebsmodus reduzierter Taktfrequenz zum Auslesen von Daten-Bits (d11 bis d26), bei der die Gesamtzahl der Parity-Bits (p1, p2, p3, p4, p5) des Codeworts (N) genau dann ausgewertet wird, wenn ein fehlerhaftes Daten-Bit detektiert ist.

FIG. 1

FIG. 2

FIG. 3

```
      d1 ...                                                      ...d26
 1.    1  0  0  0  0  0  0  0  0  0  0  0  0  0  0  0  0  0  0  0  0  0  0  0  0  0
 2.    0  1  0  0  0  0  0  0  0  0  0  0  0  0  0  0  0  0  0  0  0  0  0  0  0  0
 3.    0  0  1  0  0  0  0  0  0  0  0  0  0  0  0  0  0  0  0  0  0  0  0  0  0  0
 4.    0  0  0  1  0  0  0  0  0  0  0  0  0  0  0  0  0  0  0  0  0  0  0  0  0  0
 5.    0  0  0  0  1  0  0  0  0  0  0  0  0  0  0  0  0  0  0  0  0  0  0  0  0  0            G
 6.    0  0  0  0  0  1  0  0  0  0  0  0  0  0  0  0  0  0  0  0  0  0  0  0  0  0
 7.    0  0  0  0  0  0  1  0  0  0  0  0  0  0  0  0  0  0  0  0  0  0  0  0  0  0
 8.    0  0  0  0  0  0  0  1  0  0  0  0  0  0  0  0  0  0  0  0  0  0  0  0  0  0
 9.    0  0  0  0  0  0  0  0  1  0  0  0  0  0  0  0  0  0  0  0  0  0  0  0  0  0
10.    0  0  0  0  0  0  0  0  0  1  0  0  0  0  0  0  0  0  0  0  0  0  0  0  0  0
11.    0  0  0  0  0  0  0  0  0  0  1  0  0  0  0  0  0  0  0  0  0  0  0  0  0  0
12.    0  0  0  0  0  0  0  0  0  0  0  1  0  0  0  0  0  0  0  0  0  0  0  0  0  0
13.    0  0  0  0  0  0  0  0  0  0  0  0  1  0  0  0  0  0  0  0  0  0  0  0  0  0
14.    0  0  0  0  0  0  0  0  0  0  0  0  0  1  0  0  0  0  0  0  0  0  0  0  0  0
15.    0  0  0  0  0  0  0  0  0  0  0  0  0  0  1  0  0  0  0  0  0  0  0  0  0  0
16.    0  0  0  0  0  0  0  0  0  0  0  0  0  0  0  1  0  0  0  0  0  0  0  0  0  0
17.    0  0  0  0  0  0  0  0  0  0  0  0  0  0  0  0  1  0  0  0  0  0  0  0  0  0
18.    0  0  0  0  0  0  0  0  0  0  0  0  0  0  0  0  0  1  0  0  0  0  0  0  0  0
19.    0  0  0  0  0  0  0  0  0  0  0  0  0  0  0  0  0  0  1  0  0  0  0  0  0  0
20.    0  0  0  0  0  0  0  0  0  0  0  0  0  0  0  0  0  0  0  1  0  0  0  0  0  0
21.    0  0  0  0  0  0  0  0  0  0  0  0  0  0  0  0  0  0  0  0  1  0  0  0  0  0
22.    0  0  0  0  0  0  0  0  0  0  0  0  0  0  0  0  0  0  0  0  0  1  0  0  0  0
23.    0  0  0  0  0  0  0  0  0  0  0  0  0  0  0  0  0  0  0  0  0  0  1  0  0  0
24.    0  0  0  0  0  0  0  0  0  0  0  0  0  0  0  0  0  0  0  0  0  0  0  1  0  0
25.    0  0  0  0  0  0  0  0  0  0  0  0  0  0  0  0  0  0  0  0  0  0  0  0  1  0
26.    0  0  0  0  0  0  0  0  0  0  0  0  0  0  0  0  0  0  0  0  0  0  0  0  0  1
     -------------------------------------------------------------------------------
27.    1  1  0  1  1  0  1  0  1  0  1  1  0  1  0  1  0  1  0  1  0  1  0  1  0  1   (p1)
28.    1  0  1  1  0  1  1  0  0  1  1  0  1  1  0  0  1  1  0  0  1  1  0  0  1  1   (p2)
29.    0  1  1  1  0  0  0  1  1  1  1  0  0  0  1  1  1  1  0  0  1  1  1  1  0  0   (p3)
30.    0  0  0  0  1  1  1  1  1  1  1  0  0  0  0  0  0  0  1  1  1  1  1  1  1  1   (p4)
31.    0  0  0  0  0  0  0  0  0  0  0  1  1  1  1  1  1  1  1  1  1  1  1  1  1  1   (p5)
```

FIG. 4

```
      d11...                        ...d26
11.    1  0  0  0  0  0  0  0  0  0  0  0  0  0  0  0
12.    0  1  0  0  0  0  0  0  0  0  0  0  0  0  0  0
13.    0  0  1  0  0  0  0  0  0  0  0  0  0  0  0  0
14.    0  0  0  1  0  0  0  0  0  0  0  0  0  0  0  0
15.    0  0  0  0  1  0  0  0  0  0  0  0  0  0  0  0
16.    0  0  0  0  0  1  0  0  0  0  0  0  0  0  0  0            G'
17.    0  0  0  0  0  0  1  0  0  0  0  0  0  0  0  0
18.    0  0  0  0  0  0  0  1  0  0  0  0  0  0  0  0
19.    0  0  0  0  0  0  0  0  1  0  0  0  0  0  0  0
20.    0  0  0  0  0  0  0  0  0  1  0  0  0  0  0  0
21.    0  0  0  0  0  0  0  0  0  0  1  0  0  0  0  0
22.    0  0  0  0  0  0  0  0  0  0  0  1  0  0  0  0
23.    0  0  0  0  0  0  0  0  0  0  0  0  1  0  0  0
24.    0  0  0  0  0  0  0  0  0  0  0  0  0  1  0  0
25.    0  0  0  0  0  0  0  0  0  0  0  0  0  0  1  0
26.    0  0  0  0  0  0  0  0  0  0  0  0  0  0  0  1
     ----------------------------------------------------
27.    1  1  0  1  0  1  0  1  0  1  0  1  0  1  0  1   (p1)
28.    1  0  1  1  0  0  1  1  0  0  1  1  0  0  1  1   (p2)
29.    1  0  0  0  1  1  1  1  0  0  1  1  1  1  0  0   (p3)
30.    1  0  0  0  0  0  0  0  1  1  1  1  1  1  1  1   (p4)
31.    0  1  1  1  1  1  1  1  1  1  1  1  1  1  1  1   (p5)
```

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4453251 A
- US 4453251 F
- EP 0926687 A1